# EUROPEAN PATENT APPLICATION

(11) **EP 4 848 520 A1**
(43) Date of publication of application: **02.12.2026**
(21) Application number: 24920455.3
(22) Date of filing: 24.01.2024
(51) Int. Cl.: H02J 3/38, H02M 7/48

(54) **GRID-CONNECTED POWER CONVERSION SYSTEM**

(71) Applicant: TMEIC Corporation, Tokyo 104-0031 (JP)
(72) Inventor: UMEDA, Katsuya, Tokyo 104-0031 (JP); KINOSHITA, Masahiro, Tokyo 104-0031 (JP)
(74) Representative: TBK
(86) International application number: PCT/JP2024/002015
(87) International publication number: WO 2025/158568

(57) **Abstract**

There is provided a system-connected power conversion system, the system-connected power conversion system including a plurality of power conversion devices converting power supplied from a distributed power source into alternating current power corresponding to a power system, a controller of the power conversion device when stopping an operation of a major circuit part of the power conversion device, stopping the operation of the major circuit part after causing the major circuit part to perform a prescribed operation for a prescribed period from a timing at which it is decided to stop the operation of the major circuit part, the prescribed operation being an operation of switching the plurality of switching elements to suppress an output of a current from the major circuit part, and an input of a current from the power system into the major circuit part. Accordingly, a system-connected power conversion system that can suppress the generation of circulating currents between multiple power conversion devices with a simpler configuration is provided.

## Description

### [Technical Field]

Embodiments of the invention relate to a system-connected power conversion system.

### [Background Art]

A system-connected power conversion system that includes multiple power conversion devices is known. The multiple power conversion devices are provided to correspond respectively to multiple distributed power sources. The power conversion devices are connected to the distributed power sources and are connected in parallel to a power system. The power conversion devices also are connected in parallel to, for example, a load. The power conversion devices convert the power supplied from the distributed power sources into AC power corresponding to the power system, and supply the converted AC power to the load or the power system. As a result, the system-connected power conversion system can coordinate with the power system to supply the AC power to the load, and can supply excess power of the distributed power sources to the power system.

Each power conversion device includes a charge storage element storing DC power based on the power supplied from the multiple distributed power sources, multiple switching elements that convert the DC power stored in the charge storage element into AC power, and multiple rectifying elements connected in anti-parallel respectively to the multiple switching elements, in which the power supplied from the multiple distributed power sources is converted into AC power corresponding to the power system by switching of the multiple switching elements.

In such a system-connected power conversion system, there are cases where fluctuation of the timing at which the power conversion devices are stopped occurs when stopping the operations of the power conversion devices. When fluctuation of the timing at which the power conversion devices are stopped occurs, there is a possibility that a high-frequency circulating current (cross current) that accompanies the operations of the power conversion devices still operating may undesirably flow into the power conversion devices of which the operations are stopped, and overvoltages may be generated in the charge storage elements of the power conversion devices of which the operations are stopped.

High-frequency components that accompany the switching of the switching elements, etc., are superimposed onto the AC power supplied from the power conversion devices to the power system side. Also, a relatively large stray capacitance is present between the distributed power source and the earth and between the earth and conductors connecting the distributed power source and the power conversion device. Therefore, when fluctuation of the timing at which the power conversion devices are stopped occurs, a current of the high-frequency components superimposed onto the AC power supplied to the power system side flows to circulate via the earth between the power conversion devices that are operating and the power conversion device of which the operations are stopped. For example, the current of the high-frequency components returns to the power conversion devices that are operating via the earth, the rectifying elements, charge storage elements, and stray capacitance with the earth of the power conversion devices of which the operations are stopped, etc. As a result, there is a possibility that the charge storage elements of the power conversion devices of which the operations are stopped may be undesirably charged, and overvoltages may be generated.

There is a risk that an overvoltage generated in the charge storage element of a power conversion device may undesirably cause failure of the power conversion device.

Therefore, it has been proposed to connect the power conversion devices to the power system via isolation transformers and/or reactors to suppress the generation of circulating currents between the power conversion devices even when fluctuation of the timing at which the power conversion devices are stopped occurs.

However, in a configuration in which the power conversion devices are connected via isolation transformers and/or reactors, the number of components increases due to the isolation transformers and/or reactors, thereby causing the entire system to be larger and/or causing increased costs.

It is therefore desirable for the system-connected power conversion system to be able to suppress the generation of the circulating current between the power conversion devices with a simpler configuration.

### [Prior Art Documents]

### [Patent Literature]

[Patent Literature 1] Japanese Patent No. 6752401

### [Summary of Invention]

### [Problem to be Solved by the Invention]

Embodiments of the invention provide a system-connected power conversion system that can suppress the generation of circulating currents between multiple power conversion devices with a simpler configuration.

### [Means for Solving the Problem]

According to an embodiment of the invention, there is provided a system-connected power conversion system, the system-connected power conversion system including a plurality of power conversion devices connected to a plurality of distributed power sources and connected in parallel to a power system of alternating current power, the plurality of power conversion devices including a major circuit part connected with at least one distributed power source among the plurality of distributed power sources, the major circuit part converting power supplied from the connected at least one distributed power source into alternating current power corresponding to the power system, and a controller that controls an operation of power conversion by the major circuit part, the major circuit part including a charge storage element storing direct current power based on the power supplied from the at least one distributed power source, a plurality of switching elements configured to convert the direct current power stored in the charge storage element into alternating current power, and a plurality of rectifying elements connected in anti-parallel respectively to the plurality of switching elements, the major circuit part converting the power supplied from the at least one distributed power source into the alternating current power corresponding to the power system by switching the plurality of switching elements, by controlling the switching of the plurality of switching elements, the controller controlling the operation of the power conversion by the major circuit part, and when stopping an operation of the major circuit part, stopping the operation of the major circuit part after causing the major circuit part to perform a prescribed operation for a prescribed period from a timing at which it is decided to stop the operation of the major circuit part, the prescribed operation being an operation of switching the plurality of switching elements to suppress an output of a current from the major circuit part, and an input of a current from the power system into the major circuit part.

### [Advantageous Effects of Invention]

According to the embodiment of the invention, a system-connected power conversion system that can suppress the generation of circulating currents between multiple power conversion devices with a simpler configuration is provided.

### [Brief Description of Drawings]

[FIG. 1] FIG. 1 is a block diagram schematically illustrating a system-connected power conversion system according to an embodiment.
[FIG. 2] FIG. 2 is a block diagram schematically illustrating an example of the power conversion device according to the embodiment.

### [Description of Embodiments]

Hereinafter, embodiments will be described with reference to the drawings.

Note that the drawings are schematic or conceptual, and the relationship between the thickness and width of each portion, the proportions of sizes among portions, and so on are not necessarily the same as the actual values. Even the dimensions and proportion of the same portion may be illustrated differently depending on the drawing.

In the specification and drawings, components similar to those described in regard to a drawing thereinabove are marked with like reference numerals, and a detailed description is omitted as appropriate.

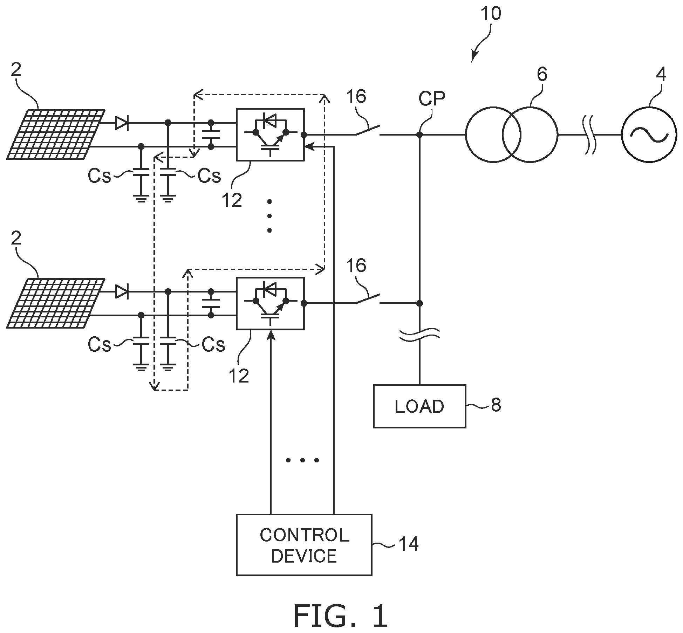

FIG. 1 is a block diagram schematically illustrating a system-connected power conversion system according to an embodiment.

As illustrated in FIG. 1, the system-connected power conversion system 10 includes multiple power conversion devices 12 and a control device 14.

The multiple power conversion devices 12 are provided to correspond respectively to multiple solar cell panels 2 (distributed power sources). However, the number of the multiple power conversion devices 12 may not always be equal to the number of the multiple solar cell panels 2 (the number of multiple distributed power sources). For example, two power conversion devices 12 may be connected to one solar cell panel 2; conversely, one power conversion device 12 may be connected to two solar cell panels 2.

The power conversion devices 12 are connected to the solar cell panels 2 and connected in parallel to a power system 4 of AC power. The input sides of the power conversion devices 12 are connected with the solar cell panels 2. The output sides of the power conversion devices 12 are connected to a connection point CP and connected with the power system 4 via the connection point CP. In other words, the output sides of the power conversion devices 12 are connected to each other via the connection point CP.

The power conversion devices 12 are connected in parallel to the power system 4 via, for example, a transformer 6. The transformer 6 is disposed between the connection point CP and the power system 4. For example, the output sides of the power conversion devices 12 are connected to the secondary side of the transformer 6. The primary side of the transformer 6 is connected with the power system 4. As a result, the power conversion devices 12 are connected to the power system 4 via the transformer 6.

For example, the system-connected power conversion system 10 further includes multiple switches 16. The multiple switches 16 are provided to correspond respectively to the multiple power conversion devices 12. The multiple switches 16 are disposed respectively between the power system 4 and the multiple power conversion devices 12. More specifically, the multiple switches 16 are disposed respectively between the connection point CP and the output sides of the multiple power conversion devices 12. The multiple switches 16 each include an engaged state in which the multiple power conversion devices 12 are connected with the power system 4, and an open state in which the multiple power conversion devices 12 are disconnected from the power system 4. As a result, by selectively opening the multiple switches 16, only the desired power conversion devices 12 among the multiple power conversion devices 12 can be disconnected from the power system 4.

On the other hand, the system-connected power conversion system 10 does not include an isolation transformer, reactor, etc., between the connection point CP and the output sides of the power conversion devices 12. For example, the output sides of the power conversion devices 12 are electrically connected to each other without magnetic coupling or the like via insulation. For example, the output sides of the power conversion devices 12 are electrically connected to each other when the switches 16 are in the engaged state.

For example, the power conversion devices 12 are connected in parallel to the power system 4 and connected in parallel to a load 8. For example, the power conversion devices 12 are connected with the load 8 via the connection point CP. The load 8 may be any load needing a supply of AC power.

The power conversion devices 12 convert the power supplied from the solar cell panels 2 into AC power corresponding to the power system 4, and supply the converted AC power to the load 8 or the power system 4. In the example, the power conversion devices 12 convert DC power supplied from the solar cell panels 2 into AC power corresponding to the power system 4. In other words, the DC power that is supplied from the solar cell panels 2 is DC power generated by the solar cell panels 2. The AC power of the power system 4 is, for example, three-phase AC power. The power conversion devices 12 convert the power supplied from the solar cell panels 2 into three-phase AC power corresponding to the power system 4. However, the AC power of the power system 4 is not limited to three-phase AC power and may be any AC power.

As a result, the system-connected power conversion system 10 can supply AC power to the load 8 in coordination with the power system 4, and can supply the excess power of the solar cell panels 2 to the power system 4.

The power conversion devices 12 may not always be connected with the load 8. For example, the power conversion devices 12 may be connected with only the power system 4 and may supply the converted AC power only to the power system 4.

The control device 14 controls the operation of the power conversion by the multiple power conversion devices 12. For example, the control device 14 also controls the switching between the open state and the engaged state of the multiple switches 16. For example, the control device 14 communicates with a higher-level controller and controls the operations of the power conversion devices 12 and the switches 16 based on commands input from the higher-level controller.

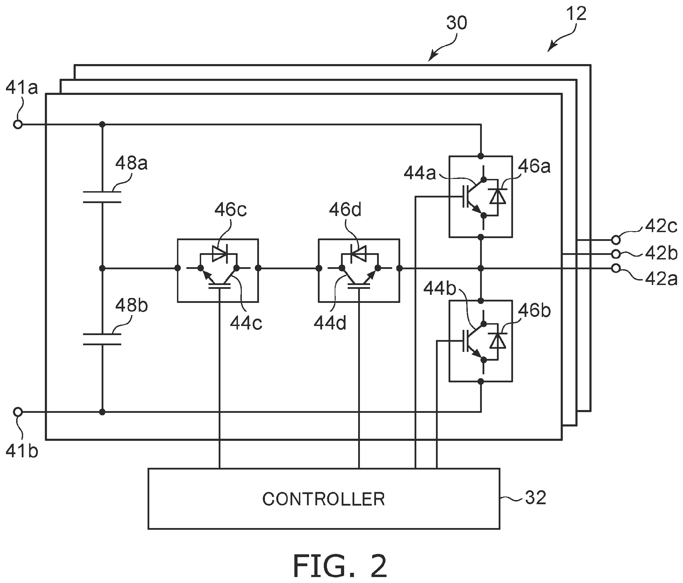

FIG. 2 is a block diagram schematically illustrating an example of the power conversion device according to the embodiment.

As illustrated in FIG. 2, the power conversion device 12 includes a major circuit part 30 and a controller 32.

The major circuit part 30 is connected with at least one solar cell panel 2 among the multiple solar cell panels 2. The major circuit part 30 converts the power supplied from the connected solar cell panel 2 into AC power corresponding to the power system 4 and supplies the converted AC power to the load 8 or the power system 4.

The major circuit part 30 includes, for example, multiple first terminals 41a and 41b, multiple second terminals 42a to 42c, multiple switching elements 44a to 44d, multiple rectifying elements 46a to 46d, and multiple charge storage elements 48a and 48b.

The multiple first terminals 41a and 41b are connected with the solar cell panel 2. The multiple first terminals 41a and 41b are terminals for receiving the supply of the power from the solar cell panel 2. In other words, the multiple first terminals 41a and 41b are input terminals. In the example, the major circuit part 30 (the power conversion device 12) includes the pair of first terminals 41a and 41b corresponding to the DC power of the solar cell panel 2. One first terminal 41a is connected with the output terminal of the high potential side of the solar cell panel 2. The other first terminal 41b is connected with the output terminal of the low potential side of the solar cell panel 2. As a result, the DC power that is output from the solar cell panel 2 is supplied to the major circuit part 30 via the pair of first terminals 41a and 41b.

The multiple second terminals 42a to 42c are connected with the power system 4 and the load 8. The multiple second terminals 42a to 42c are terminals for supplying the converted AC power to the power system 4 or the load 8. In other words, the multiple second terminals 42a to 42c are output terminals. In the example, the major circuit part 30 (the power conversion device 12) includes the three second terminals 42a to 42c corresponding to the three-phase AC power of the power system 4.

In the example, the major circuit part 30 includes the pair of charge storage elements 48a and 48b. The pair of charge storage elements 48a and 48b are connected in series between the pair of first terminals 41a and 41b.

Each of the switching elements 44a to 44d includes, for example, a semiconductor switching element such as an IGBT, a MOSFET, etc. Each of the switching elements 44a to 44d includes a pair of major terminals and a control terminal, and includes an on-state in which a current flows between the pair of major terminals, and an off-state in which the current flowing between the pair of major terminals is blocked. The off-state is not limited to a state in which the current flowing between the pair of major terminals is completely blocked, and may be a state in which a current that is faint enough not to affect the operation of the major circuit part 30 flows between the pair of major terminals. In other words, the off-state is a state in which the magnitude of the current flowing between the pair of major terminals is less than that of the on-state. The switching elements 44a to 44d are not limited to those described above, and may be any element that can switch between the on-state and the off-state.

The switching elements 44a and 44b are connected in series between the pair of first terminals 41a and 41b. In other words, the switching elements 44a and 44b are provided in parallel with the pair of charge storage elements 48a and 48b. The orientation of the current flowing when the switching elements 44a and 44b are switched to the on-state is the direction from the first terminal 41a of the high potential side toward the first terminal 41b of the low potential side.

The switching elements 44c and 44d are connected in series between the connection point of the pair of charge storage elements 48a and 48b and the connection point of the switching elements 44a and 44b. The orientation of the current flowing when the switching element 44c is switched to the on-state is the direction from the connection point of the switching elements 44a and 44b toward the connection point of the charge storage elements 48a and 48b. The orientation of the current flowing when the switching element 44d is switched to the on-state is the direction from the connection point of the charge storage elements 48a and 48b toward the connection point of the switching elements 44a and 44b. Thus, the orientation of the current flowing when the switching element 44c is switched to the on-state is the opposite orientation of the orientation of the current flowing when the switching element 44d is switched to the on-state.

The rectifying elements 46a to 46d are connected in anti-parallel with the switching elements 44a to 44d. The orientations of the currents flowing in the rectifying elements 46a to 46d are the opposite orientations of the orientations of the currents flowing when the switching elements 44a to 44d are switched to the on-state. The rectifying elements 46a to 46d are, for example, freewheeling diodes.

The connection point of the switching elements 44a and 44b is connected with the connection point of the charge storage elements 48a and 48b via the switching elements 44c and 44d and connected with the second terminal 42a. As a result, the second terminal 42a (the connection point of the switching elements 44a and 44b) is an AC output point of one phase of the three-phase AC power output from the major circuit part 30.

FIG. 2 illustrates only the configuration of one phase of the three-phase AC power output from the major circuit part 30 (the power conversion device 12). The configurations of the other phases of the major circuit part 30 are substantially the same as the configuration illustrated in FIG. 2, and so a detailed description is omitted. For example, the charge storage elements 48a and 48b may be used commonly by the circuits of the phases.

In the example, the major circuit part 30 is a bidirectional switch-type three-level inverter. As a result, in the major circuit part 30, the DC power that is supplied from the solar cell panel 2 can be converted into three-phase AC power by controlling the switching of the switching elements 44a to 44d.

However, the configuration of the major circuit part 30 is not limited to that described above. The major circuit part 30 may be, for example, a two-level inverter, etc.

Also, in the example, the solar cell panel 2 is shown as an example of a distributed power source. The distributed power source is not limited to the solar cell panel 2, and may be, for example, another power generation device such as a wind power generation device, a geothermal power generation device, or the like, or may be a power storage device, etc. The power that is supplied from the distributed power source to the major circuit part 30 is not limited to DC power and may be AC power, etc. The configuration of the major circuit part 30 may be, for example, a configuration that converts AC power supplied from a distributed power source into DC power and further converts the DC power into AC power corresponding to the power system 4, etc.

The power that is supplied from the distributed power source to the major circuit part 30 is not limited to power generated by the distributed power source and may be power stored in the distributed power source (a power storage device). Also, when the distributed power source is a power storage device, the major circuit part 30 may further have the function of converting AC power supplied from the power system 4 into DC power corresponding to the power storage device and storing the DC power after the conversion in the power storage device.

In the example, the major circuit part 30 includes the pair of charge storage elements 48a and 48b. The number of charge storage elements provided in the major circuit part 30 is not limited to two and may be one, three, or more. The DC power that is stored in the charge storage element may be the DC power supplied from the distributed power source or may be DC power after AC power supplied from the distributed power source is converted by a rectifying circuit, etc. The configuration of the charge storage element may be any configuration that can store DC power based on the power supplied from the multiple distributed power sources. The number of the multiple switching elements may be any number that can convert the power supplied from the distributed power source into AC power corresponding to the power system 4.

For example, when the power supplied from the distributed power source is three-phase AC power, the major circuit part 30 includes three first terminals. For example, when the AC power of the power system 4 is single-phase AC power, the major circuit part 30 includes two second terminals. Thus, the number of the multiple first terminals may be appropriately set according to the power supplied from the distributed power source, etc. The number of the multiple second terminals may be appropriately set according to the AC power of the power system 4, etc.

Thus, the configuration of the major circuit part 30 may be appropriately set according to the configuration of the distributed power source, the power supplied from the distributed power source, etc. The configuration of the major circuit part 30 includes at least a charge storage element that stores DC power based on the power supplied from the connected distributed power source, multiple switching elements that convert the DC power stored in the charge storage element into AC power, and multiple rectifying elements connected in anti-parallel respectively with the multiple switching elements, and may be any configuration that can convert the power supplied from the connected distributed power source into AC power corresponding to the power system 4 by switching of the multiple switching elements.

The controller 32 controls the operation of the power conversion by the major circuit part 30. For example, the controller 32 is connected with the control terminals of the switching elements 44a to 44d and controls the operation of the power conversion by the major circuit part 30 by controlling the switching of the switching elements 44a to 44d. Also, for example, the controller 32 is connected with the control device 14 and controls the operation of the major circuit part 30 based on commands input from the control device 14. For example, the controller 32 receives a command of the output target value from the control device 14 and controls the operation of the major circuit part 30 to supply AC power of a magnitude corresponding to the output target value to the load 8 or the power system 4.

In the example illustrated in FIG. 2, the magnitude of the voltage of each charge storage elements 48a and 48b is *E*/2, wherein the magnitude of the voltage of the DC power supplied from the solar cell panel 2 between the pair of first terminals 41a and 41b is *E*.

In such a case, by setting the switching elements 44a and 44d to the on-state and setting the switching elements 44b and 44c to the off-state, the voltage of *E*/2 of the charge storage element 48a is output to the second terminal 42a. By setting the switching elements 44c and 44d to the on-state and setting the switching elements 44a and 44b to the off-state, the voltage of the neutral point of the charge storage elements 48a and 48b (0 V) is output to the second terminal 42a. Also, by setting the switching elements 44a and 44d to the off-state and setting the switching elements 44b and 44c to the on-state, the voltage of - *E*/2 of the charge storage element 48b is output to the second terminal 42a.

Thus, in the example, by controlling the switching of the switching elements 44a to 44d, the three levels of voltages of *E*/2, 0, and -*E*/2 can be output from the second terminals 42a to 42c.

For example, the controller 32 controls the switching of the switching elements 44a to 44d as described above and stops the operation of the major circuit part 30 when an operation stop command from the control device 14 is input in the state in which the major circuit part 30 is performing the operation of power conversion, etc. For example, the controller 32 stops the operation of the major circuit part 30 by switching each of the switching elements 44a to 44d to the off-state. In other words, the state in which the operation of the major circuit part 30 is stopped is a gate block state in which each of the switching elements 44a to 44d is set to the off-state. In other words, the state in which the operation of the major circuit part 30 is stopped is a connection standby state in which the supply of the AC power from the major circuit part 30 to the power system 4 and the load 8 is stopped.

Also, when the distributed power source is the solar cell panel 2, the controller 32 monitors, for example, the power generation amount of the solar cell panel 2. For example, the controller 32 is connected with a voltage detector that is not illustrated, and monitors the power generation amount of the solar cell panel 2 based on the DC voltage of the solar cell panel 2 detected by the voltage detector. When the power generation amount of the solar cell panel 2 is not less than a prescribed threshold, the controller 32 controls the operation of the major circuit part 30 and supplies the AC power from the major circuit part 30 to the load 8 or the power system 4. Then, when the power generation amount of the solar cell panel 2 is less than the prescribed threshold, the controller 32 stops the operation of the major circuit part 30. When controlling the operation of the major circuit part 30, the controller 32 stops the operation of the major circuit part 30 when the power generation amount of the solar cell panel 2 changes from being the prescribed threshold or more to being less than the threshold due to effects of sunset, clouds, etc. The method of monitoring the power generation amount of the solar cell panel 2 is not limited to that described above, and may be any method that can appropriately monitor the power generation amount of the solar cell panel 2.

When stopping the operation of the major circuit part 30, the controller 32 does not immediately stop the operation of the major circuit part 30 according to an operation stop command, a reduction of the power generation amount of the solar cell panel 2, etc., but rather stops the operation of the major circuit part 30 after the major circuit part 30 has performed a prescribed operation for a prescribed period from the timing at which it is decided to stop the operation of the major circuit part 30. The timing at which it is decided to stop the operation of the major circuit part 30 is, for example, the timing at which the input of an operation stop command is received, the timing at which a reduction of the power generation amount is detected, etc.

The prescribed operation is an operation of switching the switching elements 44a to 44d of the major circuit part 30 to suppress the output of the current from the major circuit part 30 toward the power system 4 (the load 8) and the input of the current from the power system 4 into the major circuit part 30. For example, the prescribed operation is an operation of switching the switching elements 44a to 44d to a state in which the output current command value of the major circuit part 30 is set to 0. The prescribed operation is, for example, an operation of causing the major circuit part 30 to perform a zero-output operation.

For example, in the prescribed operation, the control device 14 switches the switching elements 44a to 44d of the major circuit part 30 so that the voltage waveform of the AC power output from the major circuit part 30 matches the voltage waveform of the power system 4. As a result, the switching elements 44a to 44d of the major circuit part 30 can be switched to suppress the output of the current from the major circuit part 30 and the input of the current from the power system 4 into the major circuit part 30.

However, the prescribed operation is not limited to that described above, and may be any operation that can suppress the output of the current from the major circuit part 30 toward the power system 4 and the input of the current from the power system 4 into the major circuit part 30.

For example, after the major circuit parts 30 of the power conversion devices 12 perform the prescribed operation for the prescribed period and the operations are stopped, the control device 14 disconnects, from the power system 4, the power conversion devices 12 of which the operations of the major circuit parts 30 are stopped by switching, from the engaged state to the open state, the switches 16 connected to the power conversion devices 12 of which the operations of the major circuit parts 30 are stopped.

Also, the controller 32 has a FRT (Fault Ride Through) function in which the operation of the major circuit part 30 is continued for a constant interval even when, for example, an abnormality (a system fault) such as an instantaneous drop or the like has occurred in the AC power of the power system 4. Requirements of the FRT function are, for example, "continue the operation without gate block for an instantaneous voltage drop of not less than 20% of the residual voltage with a duration within 1 second, and restore the output to be not less than 80% of the output before the voltage drop within 0.1 seconds after the voltage is restored" and "respond with gate block for a voltage drop of less than 20% of the residual voltage with a duration within 1 second, and restore the output to be not less than 80% of the output before the voltage drop within 1 second after the voltage is restored".

The controller 32 detects an abnormality of the AC power of the power system 4 and causes the major circuit part 30 to perform the operation of the FRT function according to the detection of the abnormality of the AC power of the power system 4. When the abnormality of the AC power of the power system 4 is resolved within a constant interval from the detection of the abnormality of the AC power of the power system 4, the controller 32 restores the operation of the FRT function to the normal operation according to the detection of the resolution of the abnormality of the AC power of the power system 4. The normal operation is an operation of converting the power supplied from the solar cell panels 2 into AC power corresponding to the power system 4, and supplying the converted AC power to the load 8 or the power system 4. As described above, the constant interval is, for example, 1 second. The constant interval is a duration specified in the FRT function.

On the other hand, when the abnormality of the AC power of the power system 4 is not resolved when the constant interval has elapsed from the detection of the abnormality of the AC power of the power system 4, the controller 32 stops the operation of the major circuit part 30 based on the elapse of the constant interval after the major circuit part 30 has performed the prescribed operation described above for a prescribed period.

The detection of the abnormality of the AC power of the power system 4 can be performed, for example, by providing a voltmeter and/or an ammeter, which are not illustrated, and by detecting the voltage and/or current of the AC power of the power system 4. The determination of whether or not the AC power of the power system 4 is abnormal may be performed, based on the detection result of the voltage and/or current, by the controller 32 or by a higher-level controller such as the control device 14, etc. The controller 32 may detect the abnormality of the AC power of the power system 4 by the determination based on the detection result of the voltage and/or current, or may receive an input of a signal of the abnormality detection from the higher-level controller or the like and may detect the abnormality of the AC power of the power system 4 based on the input of the signal of the abnormality detection. The detection method of the abnormality of the AC power of the power system 4 by the controller 32 is not limited to that described above and may be any method that can appropriately detect the abnormality of the AC power of the power system 4. However, the controller 32 may not always have the FRT function. The controller 32 may not always perform the detection of the abnormality of the AC power of the power system 4.

In the system-connected power conversion system 10 according to the embodiment as described above, when stopping the operation of the major circuit part 30, the controller 32 stops the operation of the major circuit part 30 after the major circuit part 30 has performed the prescribed operation for the prescribed period from the timing at which it is decided to stop the operation of the major circuit part 30.

When stopping the operation of the major circuit part 30, if the operation of the major circuit part 30 is immediately stopped without performing the prescribed operation as described above, and if fluctuation of the timing at which the major circuit parts 30 of the power conversion devices 12 are stopped occurs, there is an undesirable risk that a high-frequency circulating current (cross current) accompanying the operations of the major circuit parts 30 of the power conversion devices 12 still operating may flow in the major circuit parts 30 of the power conversion devices 12 of which the operations are stopped, and overvoltage may occur in the charge storage elements 48a and 48b of the major circuit parts 30 of the power conversion devices 12 of which the operations are stopped.

High-frequency components that accompany the switching of the switching elements 44a to 44d, etc., are superimposed onto the AC power supplied from the power conversion devices 12 to the power system 4 side. The high-frequency circulating current is, for example, an alternating current of a higher frequency than the frequency of the alternating current supplied from the power conversion devices 12 to the power system 4 side. Also, as illustrated in FIG. 1, relatively large stray capacitances Cs are present between the solar cell panel 2 (the distributed power source) and the earth and between the earth and conductors connecting the solar cell panel 2 and the power conversion device 12.

Therefore, when fluctuation of the timing at which the major circuit parts 30 of the power conversion devices 12 are stopped occurs, the high-frequency component current superimposed onto the AC power supplied to the power system 12 side flows to circulate via the earth through the power conversion devices 12 that are operating and the power conversion devices 12 of which the operations are stopped. For example, the high-frequency component current returns to the power conversion devices 12 that are operating via the earth, the rectifying elements 46a, charge storage elements 48a and 48b, and stray capacitances Cs with the earth of the major circuit parts 30 of the power conversion devices 12 of which the operations are stopped, etc. As a result, there is a possibility that the charge storage elements 48a and 48b of the power conversion devices 12 of which the operations are stopped may be undesirably charged, and overvoltage may occur.

In FIG. 1, an example of a circulating current flowing to circulate via the earth through the power conversion device 12 that is operating and the power conversion device 12 of which the operation is stopped is illustrated by a broken line for the case where the operation of the major circuit part 30 of the power conversion device 12 at the upper side is stopped and the major circuit part 30 of the power conversion device 12 at the lower side is operating. FIG. 1 illustrates an example of a current circulating counterclockwise via the power conversion devices 12 and the earth.

For example, in the example illustrated in FIG. 2, there is a possibility that the high-frequency circulating current accompanying the operation of the major circuit part 30 of the power conversion device 12 that is operating may undesirably flow into the charge storage elements 48a and 48b via the second terminal 42a and the rectifying element 46a of the major circuit part 30 of the power conversion device 12 of which the operation is stopped, and overvoltage may occur in the charge storage elements 48a and 48b. Also, when the distributed power source is the solar cell panel 2, there is a possibility that the stop of the operation of the power conversion device 12 may undesirably cause the voltage of the DC power supplied from the solar cell panel 2 to transition from the operating voltage to the open-circuit voltage, and the voltages of the charge storage elements 48a and 48b may become higher than when operating. Thus, if a circulating current flows in the rectifying element 46a in the state in which the voltages of the charge storage elements 48a and 48b are high, there is a possibility that overvoltage breakdown of the rectifying element 46a may undesirably occur.

Also, when the distributed power source is the solar cell panel 2, for example, in a time period at dusk, etc., there are cases where the power generation amount of the solar cell panel 2 decreases to the threshold vicinity, and the power conversion device 12 may repeat the state in which the major circuit part 30 operates and the state in which the operation of the major circuit part 30 is stopped. When the multiple solar cell panels 2 are provided, there is a possibility that fluctuation of the power generation amounts of the solar cell panels 2 may occur, and fluctuation of the timing of stopping the operations of the major circuit parts 30 of the power conversion devices 12 also may occur. In such a case, there is a possibility that failure of the switching elements 44a to 44d may undesirably occur if the major circuit part 30 is undesirably operated while the charge storage elements 48a and 48b are in an overvoltage state.

In the system-connected power conversion system 10 according to the embodiment, when stopping the operation of the major circuit part 30, the major circuit part 30 is caused to perform an operation of suppressing the output of the current from the major circuit part 30 toward the power system 4 (the load 8) and the input of the current from the power system 4 into the major circuit part 30. Thus, by causing the major circuit part 30 to perform the operation of suppressing the output and input of the current (hereinbelow, called the operation of the zero-output operation) before stopping, even if fluctuation of the timing of the stop of the major circuit parts 30 of the power conversion devices 12 occurs, the circulating current that accompanies the operations of the major circuit parts 30 of the power conversion devices 12 still operating can be prevented from undesirably flowing in the major circuit parts 30 of the power conversion devices 12 of which the operations are stopped. For example, by causing the major circuit part 30 to perform the operation of the zero-output operation, the flow of the current in the rectifying element 46a connected in anti-parallel with the switching element 44a can be suppressed, and the flow of the circulating current between the power conversion devices 12 can be suppressed.

Thus, in the system-connected power conversion system 10 according to the embodiment, the generation of the circulating current can be suppressed without providing an isolation transformer, reactor, or the like between the connection point CP and the output sides of the power conversion devices 12. Accordingly, in the system-connected power conversion system 10 according to the embodiment, the generation of the circulating current between the multiple power conversion devices 12 can be suppressed with a simpler configuration. For example, an enlargement of the entire system and/or increased costs due to the increase of the number of components such as isolation transformers, reactors, etc., can be suppressed.

Also, by causing the major circuit part 30 to perform the operation of the zero-output operation before stopping, even when the power generation amount of the solar cell panel 2 is repeating the state of being less than the threshold and the state of being the threshold or more in a time period of dusk, etc., the generation of the circulating current can be suppressed, and the undesirable occurrence of overvoltage breakdown of the switching elements 44a to 44d, etc., can be suppressed.

For example, the length of the prescribed period for which the operation of the zero-output operation is performed is set to be greater than the length of the period during which the power generation amount of the solar cell panel 2 repeats the state of being less than the threshold and the state of being the threshold or more. The length of the period during which the power generation amount of the solar cell panel 2 repeats the state of being less than the threshold and the state of being the threshold or more in a time period of dusk or the like is, for example, about 5 seconds to 10 seconds. Accordingly, for example, the length of the prescribed period for which the operation of the zero-output operation is performed is set to be not less than 10 seconds. As a result, for example, the generation of the circulating current can be appropriately suppressed even when the timing of the power generation amount of the solar cell panel 2 repeating the state of being less than the threshold and the state of being the threshold or more is different between the multiple power conversion devices 12.

For example, when the power generation amount of the solar cell panel 2 is less than the threshold and the major circuit part 30 is caused to perform the operation of the zero-output operation, and when the power generation amount of the solar cell panel 2 is restored to be the threshold or more, the controller 32 causes the major circuit part 30 to stop the operation of the zero-output operation and perform the operation of the normal operation. Thus, the length of the prescribed period for which the operation of the zero-output operation is performed is set to be greater than the length of the period during which the power generation amount of the solar cell panel 2 repeats the state of being less than the threshold and the state of being the threshold or more; and when the power generation amount of the solar cell panel 2 is restored to be the threshold or more during the period of the operation of the zero-output operation, the operation of the zero-output operation is stopped, and the operation of the normal operation is restored. In such a case, the major circuit part 30 repeats the operation of the normal operation and the operation of the zero-output operation while the power generation amount of the solar cell panel 2 repeats the state of being less than the threshold and the state of being the threshold or more. As a result, the generation of the circulating current can be more appropriately suppressed even when the timing of the power generation amount of the solar cell panel 2 repeating the state of being less than the threshold and the state of being the threshold or more is different between the multiple power conversion devices 12.

For example, when stopping the operation of any one of the multiple power conversion devices 12 according to a reduction of the power generation amount of the solar cell panel 2, it also may be considered to simultaneously stop the operations of the major circuit parts 30 of the power conversion devices 12 by inputting an operation stop command from the control device 14 to the power conversion devices 12. However, in such a case, the power conversion devices 12 that have available capacity of the power generation amounts of the solar cell panels 2 also are stopped, and there is a risk that the generated power of the multiple solar cell panels 2 can no longer be effectively utilized. For example, there is a risk that this may undesirably cause an increase of the power purchased from the power system 4 and/or a reduction of the power sold to the power system 4.

In the system-connected power conversion system 10 according to the embodiment, by causing the major circuit part 30 to perform the operation of the zero-output operation before stopping, the major circuit parts 30 of the power conversion devices 12 having available capacity of the power generation amounts of the solar cell panels 2 can continue normal operation while the major circuit parts 30 of the power conversion devices 12 having the reduced power generation amounts of the solar cell panels 2 perform the operation of the zero-output operation. Accordingly, compared to when an operation stop command is input from the control device 14 to the power conversion devices 12 and the operations of the major circuit parts 30 of the power conversion devices 12 are simultaneously stopped, the generated power of the multiple solar cell panels 2 can be more effectively utilized. For example, the increase of the power purchased from the power system 4 and/or the reduction of the power sold to the power system 4 can be suppressed.

Also, when an operation stop command is input from the control device 14 to the power conversion devices 12, there is also a possibility that fluctuation of the timing of stopping the operations of the power conversion devices 12 may occur due to a control lag, etc. By causing the major circuit part 30 to perform the operation of the zero-output operation before stopping, even when fluctuation of the input timing of the command from the control device 14 or the like occurs, the generation of the circulating current can be suppressed, and failure or the like of the major circuit part 30 can be suppressed.

Also, the inventor of the application found through diligent investigation that fluctuation of the timing at which the major circuit parts 30 of the power conversion devices 12 are stopped tends to occur when performing the operation of the FRT function. In the system-connected power conversion system 10 according to the embodiment, the controller 32 causes the major circuit part 30 to perform the operation of the FRT function according to the detection of an abnormality of the AC power of the power system 4, and when the abnormality of the AC power of the power system 4 is not resolved when a prescribed period of time has elapsed from the detection of the abnormality of the AC power of the power system 4, the controller 32 stops, based on the elapse of the prescribed period of time, the operation of the major circuit part 30 after the major circuit part 30 has performed the operation of the zero-output operation for a prescribed period.

As a result, even when the operation of the FRT function is performed, the generation of circulating currents between the multiple power conversion devices 12 and the occurrence of failures due to overvoltages of the power conversion devices 12 accompanying the generation of the circulating currents can be appropriately suppressed.

Also, the control device 14 disconnects the power conversion devices 12 of which the operations of the major circuit parts 30 are stopped from the power system 4 by switching the switches 16 connected to the power conversion devices 12 of which the operations of the major circuit parts 30 are stopped from the engaged state to the open state after the major circuit parts 30 of the power conversion devices 12 perform a prescribed operation for a prescribed period and then stop the operations. Thus, by switching the switches 16 connected to the power conversion devices 12 of which the operations of the major circuit parts 30 are stopped from the engaged state to the open state, for example, the flow of circulating currents into the power conversion devices 12 of which the operations of the major circuit parts 30 are stopped can be more appropriately suppressed. Also, by switching the switches 16 to the open state, for example, the unintended flow of the AC power of the power system 4 into the power conversion devices 12 can be suppressed.

The prescribed period for which the prescribed operation is performed to suppress the outputs of the currents from the power conversion devices 12 and the input of the current from the power system 4 into the power conversion devices 12 may be set to any period that can appropriately suppress the generation of circulating currents between the power conversion devices 12. For example, it is more favorable to set the prescribed period to the minimum duration that can appropriately suppress the generation of the circulating currents. As a result, an unnecessarily long duration until the operations of the power conversion devices 12 are stopped can be suppressed while appropriately suppressing the generation of the circulating currents.

The embodiment includes the following forms.

### (Appendix 1)

A system-connected power conversion system, comprising:
a plurality of power conversion devices connected to a plurality of distributed power sources and connected in parallel to a power system of alternating current power,
the plurality of power conversion devices including
   a major circuit part connected with at least one distributed power source among the plurality of distributed power sources, the major circuit part converting power supplied from the connected at least one distributed power source into alternating current power corresponding to the power system, and
   a controller that controls an operation of power conversion by the major circuit part,
the major circuit part including
   a charge storage element storing direct current power based on the power supplied from the at least one distributed power source,
   a plurality of switching elements configured to convert the direct current power stored in the charge storage element into alternating current power, and
   a plurality of rectifying elements connected in anti-parallel respectively to the plurality of switching elements,
the major circuit part converting the power supplied from the at least one distributed power source into the alternating current power corresponding to the power system by switching the plurality of switching elements,
by controlling the switching of the plurality of switching elements, the controller controlling the operation of the power conversion by the major circuit part, and when stopping an operation of the major circuit part, stopping the operation of the major circuit part after causing the major circuit part to perform a prescribed operation for a prescribed period from a timing at which it is decided to stop the operation of the major circuit part,
the prescribed operation being an operation of switching the plurality of switching elements to suppress
   an output of a current from the major circuit part, and
   an input of a current from the power system into the major circuit part.

### (Appendix 2)

The system-connected power conversion system according to appendix 1, wherein
the controller:
has a function of causing an operation of the major circuit part to continue for a constant interval even when an abnormality occurs in the alternating current power of the power system;
detects the abnormality of the alternating current power of the power system and causes the major circuit part to perform an operation of the function according to the detection of the abnormality of the alternating current power of the power system;
when the abnormality of the alternating current power of the power system is resolved within the constant interval from the detection of the abnormality of the alternating current power of the power system, restores the operation of the function to a normal operation according to a detection of the resolution of the abnormality of the alternating current power of the power system; and
when the abnormality of the alternating current power of the power system is not resolved when the constant interval has elapsed from the detection of the abnormality of the alternating current power of the power system, stops, based on the elapse of the constant interval, the operation of the major circuit part after the major circuit part has performed the prescribed operation for the prescribed period.

### (Appendix 3)

The system-connected power conversion system according to appendix 1 or 2, further comprising:
a plurality of switches disposed respectively between the power system and the plurality of power conversion devices, the plurality of switches including
   engaged states in which the plurality of power conversion devices is connected with the power system, and
   open states in which the plurality of power conversion devices is disconnected from the power system; and
a control device that controls the operations of the power conversion by the plurality of power conversion devices and controls switching between the open states and the engaged states of the plurality of switches,
the control device switching, from the engaged state to the open state, the switch connected to the power conversion device of which the operation of the major circuit part is stopped.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

### [Reference Numeral List]

2 solar cell panel (distributed power source)
4 power system
6 transformer
8 load
10 system-connected power conversion system
12 power conversion device
14 control device
16 switch
30 major circuit part
32 controller
41a, 41b first terminal
42a to 42c second terminal
44a to 44d switching element
46a to 46d rectifying element
48a, 48b charge storage element
CP connection point

## Claims

1. A system-connected power conversion system, comprising:
a plurality of power conversion devices connected to a plurality of distributed power sources and connected in parallel to a power system of alternating current power,
the plurality of power conversion devices including
a major circuit part connected with at least one distributed power source among the plurality of distributed power sources, the major circuit part converting power supplied from the connected at least one distributed power source into alternating current power corresponding to the power system, and
a controller that controls an operation of power conversion by the major circuit part,
the major circuit part including
a charge storage element storing direct current power based on the power supplied from the at least one distributed power source,
a plurality of switching elements configured to convert the direct current power stored in the charge storage element into alternating current power, and
a plurality of rectifying elements connected in anti-parallel respectively to the plurality of switching elements,
the major circuit part converting the power supplied from the at least one distributed power source into the alternating current power corresponding to the power system by switching the plurality of switching elements,
by controlling the switching of the plurality of switching elements, the controller controlling the operation of the power conversion by the major circuit part, and when stopping an operation of the major circuit part, stopping the operation of the major circuit part after causing the major circuit part to perform a prescribed operation for a prescribed period from a timing at which it is decided to stop the operation of the major circuit part,
the prescribed operation being an operation of switching the plurality of switching elements to suppress
an output of a current from the major circuit part, and
an input of a current from the power system into the major circuit part.

2. The system-connected power conversion system according to claim 1, wherein
the controller:
has a function of causing an operation of the major circuit part to continue for a constant interval even when an abnormality occurs in the alternating current power of the power system;
detects the abnormality of the alternating current power of the power system and causes the major circuit part to perform an operation of the function according to the detection of the abnormality of the alternating current power of the power system;
when the abnormality of the alternating current power of the power system is resolved within the constant interval from the detection of the abnormality of the alternating current power of the power system, restores the operation of the function to a normal operation according to a detection of the resolution of the abnormality of the alternating current power of the power system; and
when the abnormality of the alternating current power of the power system is not resolved when the constant interval has elapsed from the detection of the abnormality of the alternating current power of the power system, stops, based on the elapse of the constant interval, the operation of the major circuit part after the major circuit part has performed the prescribed operation for the prescribed period.

3. The system-connected power conversion system according to claim 1, further comprising:
a plurality of switches disposed respectively between the power system and the plurality of power conversion devices, the plurality of switches including
engaged states in which the plurality of power conversion devices is connected with the power system, and
open states in which the plurality of power conversion devices is disconnected from the power system; and
a control device that controls the operations of the power conversion by the plurality of power conversion devices and controls switching between the open states and the engaged states of the plurality of switches,
the control device switching, from the engaged state to the open state, the switch connected to the power conversion device of which the operation of the major circuit part is stopped.
